# EUROPÄISCHE PATENTSCHRIFT

(11) **EP 3 480 451 B1**
(45) Veröffentlichungstag und Bekanntmachung des Hinweises auf die Patenterteilung: **06.01.2021**
(21) Anmeldenummer: 18200573.6
(22) Anmeldetag: 16.10.2018
(51) Int. Cl.: F03B 3/12, F03B 3/18

(54) **KLEINWASSERKRAFTWERK**
SMALL HYDROELECTRIC POWER STATION
PETITE CENTRALE HYDROÉLECTRIQUE

(30) Priorität: 03.11.2017 CH 13222017
(43) Veröffentlichungstag der Anmeldung: 08.05.2019
(73) Patentinhaber: AquaZoom AG, 6302 Zug (CH)
(72) Erfinder: Vögeli, Richard, 8700 Küsnacht (CH); Petrasch, Klaus, 01877 Schmölln-Putzkau (DE)
(74) Vertreter: Frommhold, Joachim

(56) Entgegenhaltungen:
- WO-A1-82/00860
- CA-A1- 2 436 670
- CH-A2- 705 941
- FR-A1- 2 813 643

## Beschreibung

Die Erfindung betrifft ein Kleinwasserkraftwerk nach dem Funktionsprinzip eines sogenannten Wasserwirbelkraftwerks zur Gewinnung von elektrischer Energie.

Kleinwasserkraftwerke an Bächen oder kleineren Flussläufen zur Gewinnung von elektrischer Energie sind bekannt. Hierzu gehören auch sogenannte Wasserwirbelkraftwerke oder Gravitations-Wasserwirbelkraftwerke. Ein solches Wasserwirbelkraftwerk ist zum Beispiel in der CH 699133 B1 offenbart. Ein solches Wasserwirbelkraftwerk umfasst eine, in einem Rotationsbecken angeordnete Turbine, der strömendes Wasser mittels eines U-förmigen (quaderförmigen) Zuflusskanals zugeführt wird. Die Fliessgeschwindigkeit des Wassers soll gering sein und sie wird mittels eines Strömungskeils im Zuflusskanal, der vor dem Rotationsbecken an der Kanalwand angeordnet ist, erhöht. Zuflussströmung und Randströmung der drehenden Turbine sollen dabei möglichst wenig voneinander abweichen. Das beschleunigte Wasser soll in eine Abflussöffnung des Rotationsbeckens abgelenkt werden. Die Abflussöffnung ist unterhalb der Turbine gelegen und mündet in einen U-förmigen Abflusskanal.

Ein ähnliches Wirbelbecken ist in der CH 701275 B1 beschrieben, wobei anstelle eines Strömungskeils ein schwenk- oder verschiebbarer Zuflussschieber einer Zuflussregelung im Zuflusskanal vorgesehen ist. Zudem ist der Boden des Wirbelbeckens so geneigt, dass er von der Abflussöffnung zum Wirbelbeckenrand hin ansteigt oder abfällt. Und im Wirbelbecken sind Aufstiegsöffnungen als Fischwanderhilfe vorgesehen.

Gemäss EP 2794998 B1 kann der Zuflusskanal als Beschleunigungskanal auch in Strömungsrichtung zunehmend verjüngend ausgebildet sein. Der Zuflusskanal ist im Querschnitt ebenfalls quaderförmig und mit geraden Seitenwänden versehen. Unterhalb der Turbine ist im Abflusskanal ein Saugstutzen angeordnet.

Zur Durchflussregelung der Menge des abfliessenden Wassers ist es zudem bekannt, die Abflussöffnung mit einem druckgesteuerten, elastischen Element (CH 703550 A2) zu versehen, das einen variierbaren Durchmesser der Abflussöffnung ermöglicht.

Ein ähnlicher Zuflussschieber ist in der GB 397752 A beschrieben, wobei dieser hierbei als bewegbares Leitblech oder Schieber ausgebildet ist.

Die DE 376092 C zeigt eine weitere Form eines Wirbelbeckens mit einem ring- oder spiralförmigen Ende eines Zuflusskanals, wobei rings um die Turbine schaufelartige Stützen eingebaut sind, die das Gewicht der Turbine und des Kanals tragen sollen. Das Wirbelbecken weist einen Strömungskeil, ähnlich zur CH 699133 B1, auf.

Eine Turbine eines Wasserwirbelkraftwerks ist u. a. in der DE 102012100399 A1 beschrieben. Sie weist in Umfangsrichtung beabstandete Turbinenschaufeln auf, wobei durch die Kontur der innenliegenden Begrenzungskanten ein kalottenförmig gewölbter Raum entsteht. Die Turbinenschaufeln sind über zwei ringförmige, umlaufende Verbindungselemente miteinander verbunden. Vorgesehen ist weiterhin ein Aufnahmeelement an den Turbinenschaufeln, zur Verbindung mit dem Verbindungselement. Die Turbinenschaufeln sind an der Unterseite der Turbine radial nach innen begrenzt und bilden so eine Öffnung. Eine Antriebswelle ist ebenfalls mit den Verbindungselementen verbunden. Zwischen den Turbinenschaufeln sind Wandsegmente angeordnet.

Eine weitere derartige Turbine zeigt die DE 112010004236 B4. Hierbei weist die Turbine ein walzenförmiges Laufrad mit über den Umfang verteilten Laufschaufeln auf, wobei das Laufrad mit einer stirnseitigen Deckscheibe versehen ist. Die Deckscheibe ist oberhalb eines höchsten, sich einstellenden Wasserspiegels angeordnet und weist mindestens eine Luftzuführöffnung auf.

Das Dokument FR 2813643 A1 offenbart ein Wasserwirbelkraftwerk mit eine Kalotte, einem rohrförmigen Auslauf und einem Einlaufkanal: Dessen Weite ist nicht konstant und die Seitenwände sind zumindest teilweise nicht gerade.

Das Dokument WO 8200860 A1 zeigt ein dazu ähnliches Wasserwirbelkraftwerk, allerdings sind Zu- und Ablauf in der gleichen Ebene gelegen. Es sind mehrere Teilkanäle im Einlauf aufweitend ausgebildet. Zur Zuflussregelung ist ein, nicht gezeigtes, neigbares Wehr vorgesehen.

Der Erfindung liegt die Aufgabe zugrunde, ein Kleinwasserkraftwerk nach dem Funktionsprinzip eines sogenannten Wasserwirbelkraftwerks weiterzuentwickeln, insbesondere konstruktiv zu vereinfachen sowie kostengünstiger und mit einem höheren Wirkungsgrad betreibbar zu gestalten.

Diese Aufgabe ist mit den Merkmalen des Patentanspruchs 1 gelöst.

Das Kleinwasserkraftwerk soll insbesondere an Bächen oder kleineren Flussläufen effizient und kostengünstig installierbar und betreibbar sein.

Vorteilhafte Ausgestaltungen sind in den abhängigen Patentansprüchen offenbart. So sind vorteilhaft beide Seitenwände des Einlaufkanals aufweitend gebogen und die Zuflussregelung ist vorzugsweise ein aufweitbares oder ein mit Innendruck beaufschlagbares Element, welches unmittelbar vor dem Wirbelbecken im Einlaufkanal angeordnet ist.

Weiterhin bevorzugt ist das Wirbelbecken mit einer separaten Bodenplatte versehen.

Erfindungsgemäss ist im Einlaufkanal eine Zuflussregelung angeordnet.

Die Turbine ist bevorzugt mit Schaufeln und zusätzlichen Zwischenschaufeln versehen.

Die Krümmung der mindestens einen Seitenwand ist an ihrem, vom Wirbelbecken abgewandten Ende am grössten und verringert sich in Richtung des Wirbelbeckens. Das einströmende Wasser soll nicht "schiessen", um Energieverluste im Einlaufkanal und/oder im Wirbelbecken zu vermeiden.

Einlaufkanal, Wirbelbecken, Bodenplatte und Auslaufkanal sind bevorzugt einzeln fertigbare Komponenten aus Beton, Stahl oder Stahlguss, die auf der Baustelle montiert werden, was die Transport- und Lagerkosten gering hält.

Die Erfindung wird nachfolgend in einem Ausführungsbeispiel anhand einer Zeichnung näher beschrieben. In der Zeichnung zeigen die
- Fig. 1:: ein erfindungsgemässes Kleinwasserkraftwerk;
- Fig. 2:: eine Turbine des Kleinwasserkraftwerks nach Fig. 1;
- Fig. 3:: eine Turbine nach Fig. 2 in anderer Ausführungsform;
- Fig. 4:: Ausführungsformen a) bis c) des Einlaufkanals nach Fig. 1;
- Fig. 5:: Einlaufkanal und Wirbelbecken nach Fig. 1 mit Funktionsstellungen a) und b) der Zuflussregelung;
- Fig. 6:: den Einlaufkanal nach Fig. 1 im Schnitt;
- Fig. 7:: eine Bodenplatte des Wirbelbeckens nach Fig. 1.

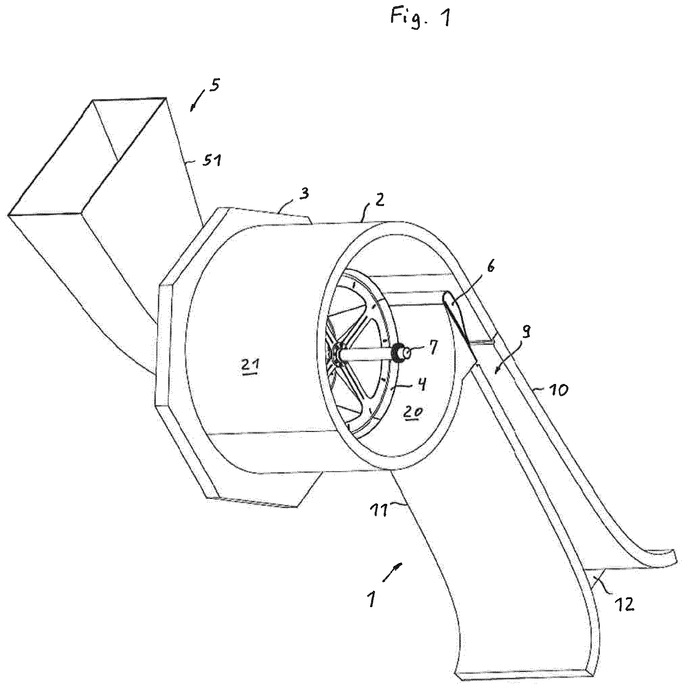

Ein erfindungsgemässes Kleinwasserkraftwerk in Form eines Wasserwirbelkraftwerks zur Gewinnung von elektrischer Energie an insbesondere kleinen Flussläufen ist in der Fig. 1 dargestellt. Es umfasst als wesentliche Komponenten ein Wirbelbecken 2 zur Aufnahme einer Turbine 4, mit einem Einlaufkanal 1, der als Beschleunigungskanal in Strömungsrichtung verjüngend ausgebildet ist und einen Auslaufkanal 5. Das Wirbelbecken 2 ist auf einer Bodenplatte 3 angeordnet.

Einlaufkanal 1, Wirbelbecken 2, Bodenplatte 3 und Auslaufkanal 5 sind im Beispiel aus Beton gefertigt, könnten aber zum Beispiel auch aus Stahl oder Stahlguss oder anderen geeigneten Baustoffen gefertigt werden. Diese Komponenten können somit extern vorgefertigt sein und werden erst auf der Baustelle des Kleinwasserkraftwerks montiert. Die Verbindung der Komponenten kann zum Beispiel mittels Schraubverbindungen und geeigneter Dichtungen erfolgen.

Die Turbine 4 ist im Wirbelbecken 2 drehbar angeordnet und mit ihrer Rotorwelle 7 auf einer üblichen, nicht dargestellten Plattform gehalten. An die Rotorwelle 7 ist ein, ebenfalls nicht dargestellter Generator und ggf. ein Getriebe angeflanscht.

Das Wirbelbecken 2 ist im Querschnitt "spiralförmig" (logarithmische Spirale oder näherungsweise durch sich verkleinernde Beckenradien), so dass sich das Wasservolumen gegenüber einem kreisförmigen Becken möglichst genau um die Durchflussmenge verringert.

Beide Seitenwände 10, 11 des Einlaufkanals 1 sind an ihrer Basis, dem vom Wirbelbecken 2 abgewandten Ende, aufweitend gebogen. Der Querschnitt des Einlaufkanals 1 verjüngt sich zum Wirbelbecken 2 hin deutlich und stetig, was eine starke und gleichmässige Beschleunigung des zufliessenden Wassers zur Folge hat. Eine gleichmässige Beschleunigung des Wassers verhindert Wirbel und damit Energieverluste.

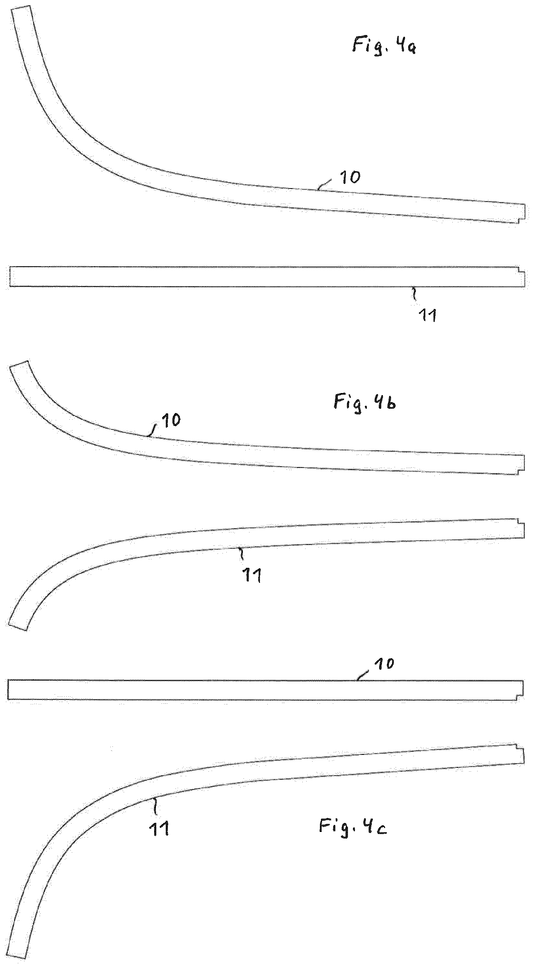

Es können jedoch auch nur die rechte oder linke Seitenwand 10, 11 des Einlaufkanals 1 aufweitend gebogen sein (Fig. 4a, 4c). Die Länge des Einlaufkanals 1 ist bevorzugt grösser als der Durchmesser des Wirbelbeckens 2.

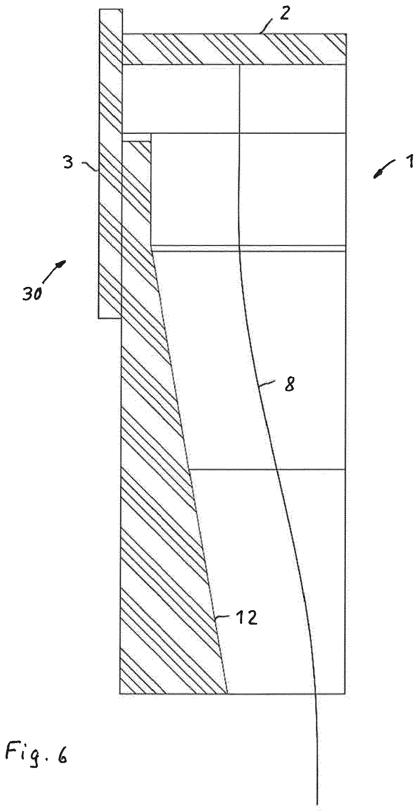

Der innere Boden 12 des Einlaufkanals 1 fällt zum Wirbelbecken 2 hin ab (Fig. 6), was die Beschleunigung des zufliessenden Wassers unterstützt, der Wasserspiegel 8 fällt entsprechend ab.

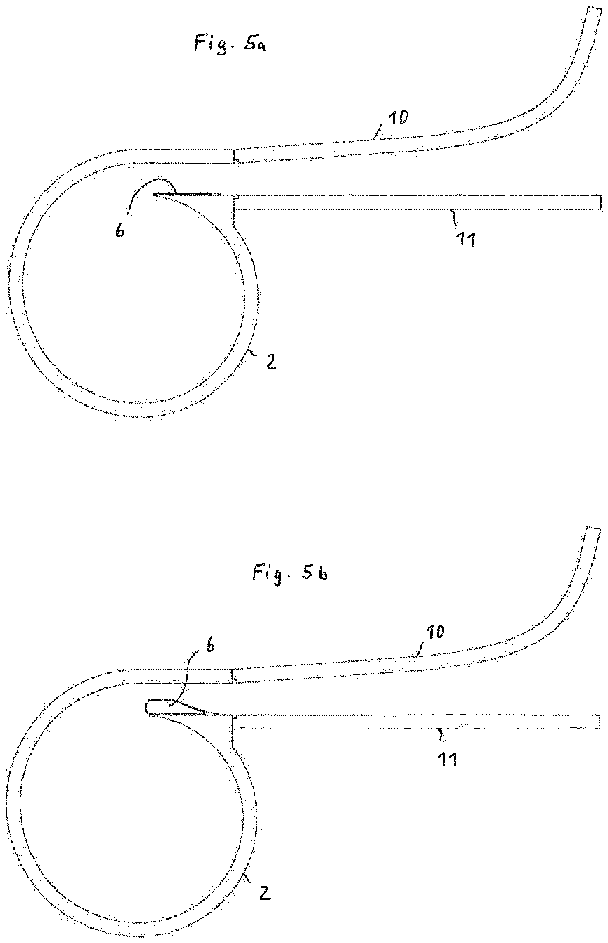

Am verjüngten Ende des Einlaufkanals 1 (resp. im Einlaufbereich 9 des Wirbelbeckens 2) ist an, im Beispiel einer, Seitenwand 11 eine Zuflussregelung 6 (Fig. 1) angeordnet, mit der der Querschnitt des verjüngten Endes des Einlaufkanals 1 verändert werden kann. Die Zuflussregelung 6 ist erfindungsgemäss ein elastisches, mit Druck beaufschlagtes Element, welches an der Seitenwand 11 resp. dem nachfolgenden Einlaufbereich (Fig. 5a, 5b) angeordnet ist und mit einer, nicht dargestellten, Druckquelle verbunden ist. Das Element ist im Beispiel mit Wasser füllbar, doch können auch andere Medien verwendet werden.

Mittels der Zuflussregelung 6 kann auch bei Niedrigwasser eine ausreichend hohe Geschwindigkeit des zuströmenden Wassers erreicht werden. Indem das elastische Element vergrössert wird, wird der Querschnitt des Einlaufkanals 1 resp. des Einlaufbereichs 9 verringert und die Strömungsgeschwindigkeit des Wassers erhöht.

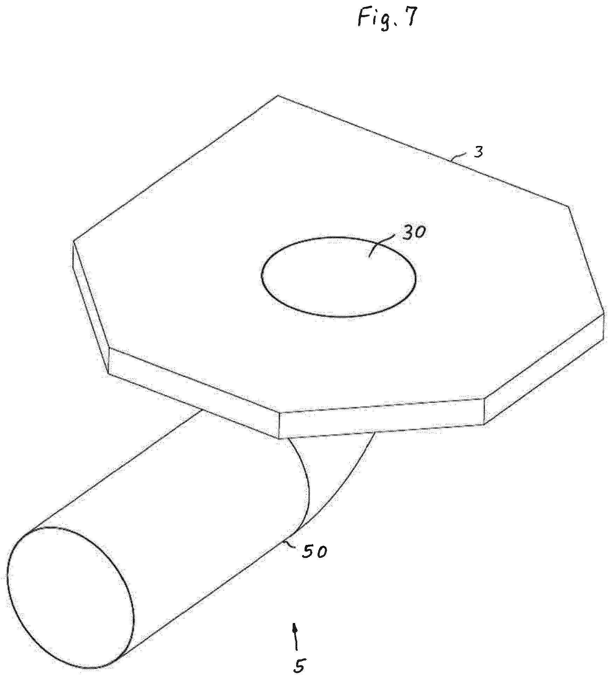

Die Bodenplatte 3 weist im Beispiel eine Dicke von ca. 200mm auf und weist eine Abflussöffnung 30 zum Auslaufkanal 5 auf, die unterhalb der Turbine 4 gelegen ist (Fig. 7). Der Auslaufkanal 5 kann als Rohr 50 (Fig. 7) oder Diffusor 51 (Fig. 1) ausgebildet sein.

Durch einen Diffusor 51 wird die Querschnittsfläche am Ende des Abflusses vergrössert. Somit sinkt dort die Strömungsgeschwindigkeit.

Die erfindungsgemässe Turbine 4 weist eine Kalotte 42 und im Längsschnitt die Form eines Pyramiden- resp. Kegelstumpfes, mit gerader Wandung auf. Möglich wäre auch eine gewölbte Wandung, die jedoch einen höheren Fertigungsaufwand erfordern kann.

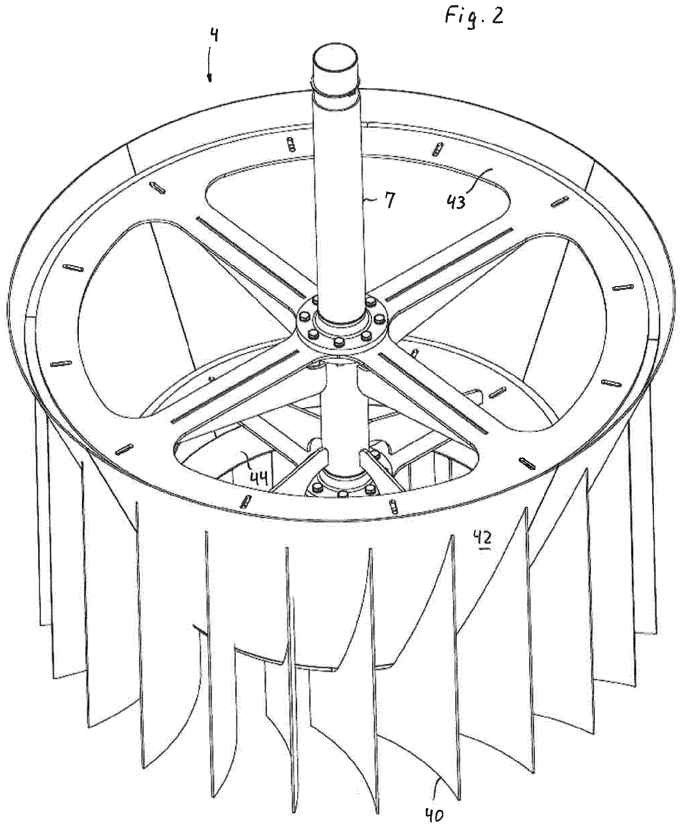

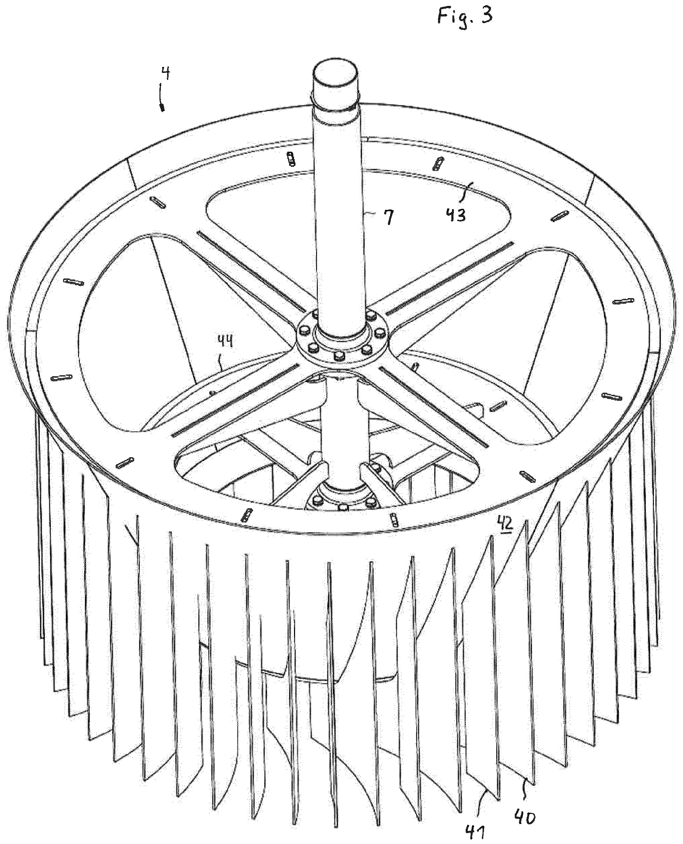

Auf der Aussenwand der Kalotte 42 sind Schaufeln 40 angebracht (Fig. 2) und zur Erhöhung des Wirkungsgrades der Turbine können zusätzliche Zwischenschaufeln 41, bevorzugt in gleicher Bauform, angeordnet sein (Fig. 3).

Der Rotor 7 der Turbine 4 ist im Beispiel in radförmigen Stützelementen 43, 44 aufgenommen, die zudem mit der Innenwand der Kalotte 42 verbunden sind und auch der Versteifung der Turbine 4 dienen. Die gesamte Turbine 4 könnte aber auch mittels 3D-Druck und ggf. sogar ohne radförmige Stützelemente hergestellt werden.

Nicht dargestellt sind fachübliche Zusatzelemente am bzw. auf dem Wirbelbecken 2, insbesondere Rechen und eine Plattform mit Turbinengetriebe, Schalteinrichtungen etc.

### Liste der Bezugszeichen

- 1: Einlaufkanal
- 2: Wirbelbecken
- 3: Bodenplatte
- 4: Turbine
- 5: Auslaufkanal
- 6: Zuflussregelung
- 7: Rotorwelle
- 8: Wasserspiegel
- 9: Einlaufbereich
- 10: Seitenwand
- 11: Seitenwand
- 12: Boden
- 20: Innenwandung
- 21: Aussenwandung
- 30: Abflussöffnung
- 40: Schaufel
- 41: Zwischenschaufel
- 42: Kalotte
- 43: Stützelement
- 44: Stützelement
- 50: Rohr
- 51: Diffusor

## Patentansprüche

1. Kleinwasserkraftwerk in Form eines Wasserwirbelkraftwerks, umfassend ein Wirbelbecken (2) mit einem Einlaufkanal (1), der als Beschleunigungskanal in Strömungsrichtung verjüngend ausgebildet ist, und einem Auslaufkanal (5), wobei im Wirbelbecken (2) eine Turbine (4) drehbar angeordnet ist, eine Abflussöffnung des Auslaufkanals (5) unterhalb der Turbine (4) gelegen ist, der Einlaufkanal (1) in Strömungsrichtung des Wassers verjüngend ausgebildet ist und wobei mindestens eine Seitenwand (10, 11) des Einlaufkanals (1) an ihrer Basis, dem vom Wirbelbecken (2) abgewandten Ende, aufweitend gebogen resp. gekrümmt ist und wobei ein Boden (12) des Einlaufkanals (1) zum Wirbelbecken (2) hin abfällt, **dadurch gekennzeichnet, dass** im Einlaufkanal (1) eine Zuflussregelung (6) in Form eines mit Druck beaufschlagbaren, elastischen Elements, welches mit einer Druckquelle verbunden und mit einem Medium füllbar ist, angeordnet ist.

2. Kleinwasserkraftwerk nach Anspruch 1, **dadurch gekennzeichnet, dass** beide Seitenwände (10, 11) des Einlaufkanals (1) an ihrer Basis, dem vom Wirbelbecken (2) abgewandten Ende, aufweitend gebogen resp. gekrümmt sind.

3. Kleinwasserkraftwerk nach Anspruch 1 oder 2, **dadurch gekennzeichnet, dass** die Zuflussregelung (6) ein aufweitbares oder druckbeaufschlagtes Element ist und unmittelbar vor dem Wirbelbecken (2) im Einlaufkanal (1) angeordnet ist.

4. Kleinwasserkraftwerk nach einem der Ansprüche 1 bis 3, **dadurch gekennzeichnet, dass** das Wirbelbecken (2) mit einer Bodenplatte (3) versehen ist.

5. Kleinwasserkraftwerk nach einem der Ansprüche 1 bis 4, **dadurch gekennzeichnet, dass** die Turbine (4) eine Kalotte (42) aufweist.

6. Kleinwasserkraftwerk nach einem der Ansprüche 1 bis 5, **dadurch gekennzeichnet, dass** der Auslaufkanal (5) rohrförmig oder als Diffusor (51) ausgebildet ist.

7. Kleinwasserkraftwerk nach einem der Ansprüche 1 bis 6, **dadurch gekennzeichnet, dass** Einlaufkanal (1), Wirbelbecken (2), Bodenplatte (3) und Auslaufkanal (5) Komponenten aus Beton, Stahl, Stahlguss oder anderen geeigneten Baustoffen sind.

8. Kleinwasserkraftwerk nach einem der Ansprüche 1 bis 7, **dadurch gekennzeichnet, dass** die Turbine (4) mit Schaufeln (40) und Zwischenschaufeln (41) versehen ist.

## Claims

1. Small hydroelectric power station in the form of a water vortex power station, comprising a vortex basin (2) with an inlet channel (1), which is designed as an acceleration channel tapering in the direction of flow, and an outlet channel (5), a turbine (4) being rotatably arranged in the vortex basin (2), an outlet opening into the outlet channel (5) is located below the turbine (4), the inlet channel (1) is designed to be tapered in the direction of flow of the water, and at least one side wall (10, 11) of the inlet channel (1) being bent or curved so as to widen at its base, the end facing away from the swirl basin (2). and wherein a bottom (12) of the inlet channel (1) slopes down towards the swirl basin (2), **characterised in that** an inflow control (6) in the form of an elastic element which can be subjected to pressure, is connected to a pressure source and can be filled with a medium is arranged in the inlet channel (1).

2. small hydroelectric power station according to claim 1, **characterised in that** both side walls (10, 11) of the inlet channel (1) are bent or curved in an expanding manner at their base, the end remote from the vortex basin (2).

3. small hydroelectric power station according to claim 1 or 2, **characterised in that** the inflow control (6) is an expandable or pressurised element and is arranged in the inlet channel (1) immediately before the vortex basin (2).

4. small hydroelectric power plant according to one of claims 1 to 3, **characterised in that** the vortex basin (2) is provided with a bottom plate (3).

5. Small hydroelectric power plant according to one of the claims 1 to 4, **characterised in that** the turbine (4) has a spherical cap (42).

6. small hydroelectric power station according to one of the claims 1 to 5, **characterised in that** the outlet channel (5) is tubular or designed as a diffuser (51).

7. small hydroelectric power station according to one of claims 1 to 6, **characterised in that** the inlet channel (1), the vortex basin (2), the base plate (3) and the outlet channel (5) are components made of concrete, steel, cast steel or other suitable building materials.

8. small hydroelectric power station according to one of the claims 1 to 7, **characterised in that** the turbine (4) is provided with blades (40) and intermediate blades (41).

## Revendications

1. Petite centrale hydroélectrique sous forme de centrale à tourbillon d'eau, comprenant un bassin tourbillonnaire (2) avec un canal d'entrée (1), qui est conçu comme un canal d'accélération se rétrécissant dans la direction de l'écoulement, et un canal de sortie (5), une turbine (4) étant disposée de manière rotative dans le bassin tourbillonnaire (2), une ouverture de décharge du canal de sortie (5)étant située en dessous de la turbine (4), le canal d'entrée (1) étant conçu pour être conique dans le sens de l'écoulement de l'eau, et au moins une paroi latérale (10, 11) du canal d'entrée (1) étant pliée ou cintrée de manière à s'élargir à sa base, l'extrémité étant tournée à l'opposé du bassin de tourbillonnement (2), le fond (12) du canal d'admission (1) étant incliné vers le bas en direction du bassin de tourbillonnement (2), et **caractérisé en ce qu'**un dispositif de contrôle de l'écoulement (6) sous la forme d'un élément élastique pouvant être soumis à une pression, relié à une source de pression et pouvant être rempli d'un fluide est disposé dans le canal d'admission (1).

2. Petite centrale hydroélectrique selon la revendication 1, **caractérisée en ce que** les deux parois latérales (10, 11) du canal d'amenée (1) sont pliées ou courbées de manière à s'élargir à leur base, à l'extrémité opposée au bassin de tourbillonnement (2).

3. Petite centrale hydroélectrique selon la revendication 1 ou 2, **caractérisée en ce que** la commande d'entrée (6) est un élément expansible ou pressurisé et est disposée dans le canal d'entrée (1) immédiatement avant le bassin de tourbillonnement (2).

4. petite centrale hydroélectrique selon l'une quelconque des revendications 1 à 3, **caractérisée en ce que** le bassin de tourbillonnement (2) est muni d'une plaque de fond (3).

5. petite centrale hydroélectrique selon l'une des revendications 1 à 4, **caractérisée en ce que** la turbine (4) a une calotte sphérique (42).

6. petite centrale hydroélectrique selon l'une des revendications 1 à 5, **caractérisée en ce que** le canal de sortie (5) est tubulaire ou est conçu comme un diffuseur (51).

7. Petite centrale hydroélectrique selon l'une des revendications 1 à 6, **caractérisée en ce que** le canal d'entrée (1), le bassin de tourbillonnement (2), la plaque de base (3) et le canal de sortie (5) sont des éléments de construction en béton, en acier, en acier moulé ou en d'autres matériaux de construction appropriés.

8. petite centrale hydroélectrique selon l'une des revendications 1 à 7, **caractérisée en ce que** la turbine (4) est pourvue d'aubes (40) et d'aubes intermédiaires (41).
